# EUROPÄISCHE PATENTSCHRIFT

(11) **EP 3 308 640 B1**
(45) Veröffentlichungstag und Bekanntmachung des Hinweises auf die Patenterteilung: **08.12.2021**
(21) Anmeldenummer: 17195962.0
(22) Anmeldetag: 11.10.2017
(51) Int. Cl.: A01K 35/00, A01K 31/16, A01K 31/00, A01K 39/012, A01K 45/00

(54) **WIEGEMODUL FÜR EIN NEST IN EINER GEFLÜGELTIERHALTUNG UND NEST**
NEST AND WEIGHING MODULE FOR A NEST IN POULTRY HUSBANDRY
MODULE DE PESAGE POUR UN NID DANS UN ÉLEVAGE DE VOLAILLE ET NID

(30) Priorität: 12.10.2016 DE 202016105709 U
(43) Veröffentlichungstag der Anmeldung: 18.04.2018
(73) Patentinhaber: Big Dutchman International GmbH, 49377 Vechta (DE)
(72) Erfinder: SCHÜRMANN, Michael, 26169 Friesoythe (DE); GRAVE, Johann Heinrich, 49692 Schwichteler (DE)
(74) Vertreter: Eisenführ Speiser

(56) Entgegenhaltungen:
- WO-A1-2005/099448
- CN-A- 104 041 429
- CN-A- 104 839 034
- CN-U- 205 052 492
- JP-A- S58 832
- JP-A- S5 973 735
- US-A- 4 811 694
- US-A- 4 920 923

## Beschreibung

Die Erfindung betrifft ein Wiegemodul für ein Nest in einer Geflügeltierhaltung, ein Nest für eine Geflügeltierhaltung und ein Verfahren zur Wiegung von Geflügeltieren.

Tieraufenthaltsbereiche, insbesondere Nester, für die Geflügeltierhaltung sind bekannt, beispielsweise aus US6394031B1, CN103548712A, DE4203637C2, DE10027124C1, DE19730652A1, DE202015101803U1, EP1736047A1, EP2011392B1, EP2022327A1, FR2801471A1 oder GB1461384A. Aus der JP S59 73735 A ist eine Vorrichtung zum Messen eines Gewichts eines Hühnertieres bekannt. Die CN 205 052 492 U, die US 4,920,923 und die JP S58 832 A lehren jeweils ein System zur Geflügelaufzucht. In der WO 2005/099448 ist ein Nestsystem und eine Eiersammelvorrichtung beschrieben. Aus der CN 104 041 429 A ist ein Überwachungsverfahren für Hühnervögel bekannt. Die US 4,811,694 A beschreibt eine Fütterungsvorrichtung mit einer beweglichen Sitzstange, die mit einer Wiegevorrichtung gekoppelt ist. Die FR 2 998 135 A1 beschreibt eine Vorrichtung zur Bestimmung der Futteraufnahme von Geflügeltieren. Während existierende Lösungen bereits verschiedene Vorteile haben, sind weitere Verbesserungen wünschenswert.

Es ist daher eine Aufgabe der vorliegenden Erfindung, ein Wiegemodul für ein Nest in einer Geflügeltierhaltung, ein Nest für eine Geflügeltierhaltung und ein Verfahren zur Wiegung von Geflügeltieren bereitzustellen, welche existierende Lösungen verbessern. Insbesondere ist es eine Aufgabe der vorliegenden Erfindung, ein Wiegemodul für ein Nest in einer Geflügeltierhaltung, ein Nest für eine Geflügeltierhaltung und ein Verfahren zur Wiegung von Geflügeltieren bereitzustellen, welche gegenüber existierenden Lösungen eine verbesserte Funktionalität und/oder eine Zusatzfunktion aufweisen.

Gemäß einem ersten Aspekt der Erfindung wird die Aufgabe gelöst durch ein Wiegemodul für ein Nest in einer Geflügeltierhaltung, umfassend einen Boden zur Aufnahme von Geflügeltieren und/oder von einer Nestunterlage und eine Haltevorrichtung, mit der das Wiegemodul an einer Tieraufenthaltsvorrichtung, insbesondere an einer Nestvorrichtung befestigbar ist, wobei der Boden über ein Wiegeelement gelagert ist, wobei das Wiegeelement zwischen der Haltevorrichtung und dem Boden angeordnet ist.

Der Boden des Wiegemoduls ist vorzugweise derart angeordnet und ausgebildet, dass Geflügeltiere den Boden direkt betreten und/oder sich direkt auf dem Boden aufhalten können. Zusätzlich oder alternativ kann der Boden des Wiegemoduls angeordnet und ausgebildet sein, dass darauf eine Nestunterlage, beispielsweise eine Einlegematte, angeordnet werden kann und die Geflügeltiere dann diese Einlegematte betreten und/oder sich auf der Einlegematte aufhalten.

Die Haltevorrichtung des Wiegemoduls dient allgemein dazu, das Wiegemodul an einer Tieraufenthaltsvorrichtung zu befestigen. Die Tieraufenthaltsvorrichtung ist vorzugsweise als Teil eines Tieraufenthaltsbereichs in einem Geflügeltierstall angeordnet, wobei ein Geflügeltierstall in der Regel eine Vielzahl von Tieraufenthaltsvorrichtungen aufweist. Vorzugsweise können alle oder ein Teil der Tieraufenthaltsvorrichtungen eines Geflügeltierstalls mit einem erfindungsgemäßen Wiegemodul ausgestattet sein. Eine Tieraufenthaltsvorrichtung kann vorzugsweise als Einzeltieraufenthaltsvorrichtung ausgebildet sein, worunter insbesondere Tieraufenthaltsvorrichtungen zu verstehen sind, die ausgebildet sind für den Aufenthalt eines einzelnen Geflügeltieres. Die Haltevorrichtung des Wiegemoduls dient dazu, dass Wiegemodul an einer Nestvorrichtung zu befestigen, beispielsweise an einem Nestgehäuse. Das Nest ist vorzugsweise als Teil eines Tieraufenthaltsbereichs in einem Geflügeltierstall angeordnet, wobei ein Geflügeltierstall in der Regel eine Vielzahl von Nestern aufweist. Vorzugsweise können alle oder ein Teil der Nester eines Geflügeltierstalls mit einem erfindungsgemäßen Wiegemodul ausgestattet sein.

Das Wiegemodul ist mittels der Haltevorrichtung vorzugsweise an einem Nestgehäuse befestigbar. Das Nestgehäuse kann zu einem Einzelnest oder zu einem Gruppennest gehören. Ein Einzelnest ist vorzugsweise ausgebildet für den Aufenthalt eines einzelnen Geflügeltieres. Ein Gruppennest ist vorzugweise ausgebildet für den gleichzeitigen Aufenthalt von zwei, drei oder mehreren Geflügeltieren. Vorzugsweise ist ein für den Einsatz in einem Einzelnest vorgesehenes Wiegemodul ausgebildet, das Gewicht eines einzelnen Geflügeltieres zu ermitteln. Vorzugsweise ist ein für den Einsatz in einem Gruppennest vorgesehenes Wiegemodul ausgebildet, das Gewicht aller im Nest befindlichen Geflügeltieren zu ermitteln und/oder das Gewicht einzelner Geflügeltiere zu ermitteln, insbesondere das Gewicht einzelner Geflügeltiere, die das Gruppennest betreten und/oder verlassen.

Die Haltevorrichtung kann auch dazu dienen, das Wiegemodul an einer Vorrichtung zur Einzelfütterung von Geflügeltieren zu befestigen. Die Vorrichtung zur Einzelfütterung von Geflügeltieren ist vorzugsweise als Teil eines Tieraufenthaltsbereichs in einem Geflügeltierstall angeordnet, wobei ein Geflügeltierstall in der Regel eine Vielzahl von Vorrichtungen zur Einzelfütterung von Geflügeltieren aufweist. Vorzugsweise können alle oder ein Teil der Vorrichtungen zur Einzelfütterung von Geflügeltieren eines Geflügeltierstalls mit einem erfindungsgemäßen Wiegemodul ausgestattet sein. Es ist auch möglich, dass eine Tieraufenthaltsvorrichtung sowohl die Funktion eines Einzelnests als auch die Funktion einer Vorrichtung zur Einzelfütterung von Geflügeltieren aufweist.

Ferner vorzugsweise ist der Boden über das Wiegeelement an der Haltevorrichtung gelagert. Ein Wiegeelement kann beispielsweise als Wiegezelle ausgebildet sein.

Das erfindungsgemäße Wiegemodul ermöglicht es, ein Geflügeltier beim Aufenthalt im Nest, insbesondere mittelbar oder unmittelbar auf dem Boden des Wiegemoduls, zu wiegen. Die Gewichtsermittlung ist eine wichtige Kenngröße in der Geflügeltierhaltung, da beispielsweise die Fütterung und/oder die Ausstallung (auch) vom Gewicht der Geflügeltiere abhängt. Die Erfindung beruht unter anderem auf der Erkenntnis, dass sich die Geflügeltiere im Nestbereich zum einen meist vereinzelt und zum anderen meist über einen für eine Wiegung bzw. einen Wiegevorgang ausreichenden Zeitraum relativ ruhig und bewegungsarm aufhalten. Das erfindungsgemäße Wiegemodul ermöglicht somit eine nestintegrierte Wiegung der Geflügeltiere, welche eine besonders schonende und/oder genaue Ermittlung des Gewichts der Geflügeltiere erlaubt.

Entsprechende Vorteile ergeben sich auch bei der Anordnung des Wiegemoduls in einer Vorrichtung zur Einzelfütterung von Geflügeltieren. Beispielsweise kann hierbei durch einen Vergleich des Gewichts beim Eintritt in die Vorrichtung zur Einzelfütterung von Geflügeltieren und beim Austritt aus der Vorrichtung zur Einzelfütterung von Geflügeltieren eine Gewichtsveränderung ermittelt werden, die beispielsweise Rückschlüsse auf die Futteraufnahme während des Aufenthalts in der Vorrichtung zur Einzelfütterung von Geflügeltieren ermöglicht. Durch die Ermittlung einer tierindividuellen

Futteraufnahme werden ferner Rückschlüsse auf die tierindividuelle Futterkonversionsrate ermöglicht, was zu einer Optimierung des Stall- und/oder Futter- und/oder Wachstumsmanagements eingesetzt werden kann. Ferner können aus der Futteraufnahme, insbesondere aus daraus etwa durch Vergleich mit historischen und/oder Prognosewerten abgeleiteten Veränderungen im Fressverhalten frühzeitig Hinweise auf Krankheiten ermittelt werden. Auf diese Weise können Krankheitsausbrüche frühzeitig erkannt und ein Medikamenteneinsatz reduziert oder vermieden werden, was zum Tierwohl bei trägt.

Gemäß einer bevorzugten Ausführungsform ist vorgesehen, dass der Boden über zwei, drei oder mehrere, insbesondere vier, Wiegeelemente gelagert ist. Insbesondere ist es bevorzugt, dass der Boden auf zwei gegenüberliegenden Seiten über jeweils ein Wiegeelement, vorzugsweise jeweils zwei Wiegeelemente, gelagert ist. Eine Lagerung des Bodens über mehrere Wiegeelemente an der Haltevorrichtung hat den Vorteil, dass eine gleichmäßige Gewichtsermittlung erfolgen kann. Insbesondere ist es bevorzugt, dass vier Wiegeelemente vorgesehen sind, die vorzugsweise im Bereich der Ecken eines im Wesentlichen rechteckigen oder quadratischen Bodens angeordnet sind. Hierzu können beispielsweise jeweils zwei Wiegeelemente an gegenüberliegenden Seiten des Bodens, beispielsweise den beiden kurzen Seiten eines rechteckigen Bodens, angeordnet sein.

Vorzugsweise umfasst die Haltevorrichtung zwei oder mehr Halteelemente, wobei vorzugsweise an zwei gegenüberliegenden Seiten des Bodens jeweils ein Halteelement angeordnet ist, wobei vorzugsweise jedes der beiden Halteelemente über jeweils zwei an gegenüberliegenden Enden des Halteelements angeordnete Wiegeelemente mit den Eckbereichen des Bodens an dieser Seite verbunden ist.

Eine bevorzugte Weiterbildung zeichnet sich dadurch aus, dass der Boden im Betriebszustand zur Horizontalen, insbesondere zu einer horizontalen Ebene, geneigt ausgerichtet ist. Eine solche Neigung des Bodens eines Nests ist besonders bevorzugt, um beispielsweise das Abrollen von Eiern vom Boden zu einer Eiaufnahmevorrichtung zu erleichtern. Die Neigung beträgt vorzugsweise zwischen 1 und 45°, vorzugsweise bis zu 30° oder bis zu 20° oder bis zu 15° oder bis zu 10° oder bis zu 5°.

In einer weiteren bevorzugten Ausführungsform ist vorgesehen, dass zwei gegenüberliegende Kanten des Bodens, insbesondere eine im Betriebszustand obere und eine im Betriebszustand untere Kante des Bodens, jeweils an einer Schiene befestigt sind. Vorzugsweise dienen die Schienen der Befestigung des Bodens an der Haltevorrichtung, ferner vorzugsweise über die Wiegeelemente. Die Wiegeelemente sind vorzugsweise an Seiten oder Kanten des Bodens angeordnet, an denen sich keine Schiene befindet.

Es ist ferner bevorzugt, dass eine im Betriebszustand obere Kante des Bodens über ein Abstandselement oder mehrere Abstandselemente gelagert ist. Ein Abstandselement kann beispielsweise als U- Profil ausgebildet sein. Durch das Vorsehen von einem oder mehreren Abstandselementen ergibt sich eine geneigte Anordnung des Bodens in einer besonders einfachen Weise. Das Abstandselement befindet sich vorzugsweise zwischen einem Wiegeelement und der Schiene, auf der die im Betriebszustand obere Kante des Bodens gelagert ist.

Eine weitere bevorzugte Ausführungsform ist gekennzeichnet durch eine Sendeeinrichtung, die angeordnet und ausgebildet ist, vom Wiegeelement ermittelte Daten zu senden. Die von dem Wiegeelement oder den Wiegeelementen des Wiegemoduls ermittelten Daten zum Gewicht eines auf dem Boden befindlichen Geflügeltieres können vorzugsweise übermittelt werden, beispielsweise an eine zentrale Auswerteeinheit. Die Datenübermittlung kann drahtlos oder leitungsgebunden erfolgen. Ferner kann die Datenübermittlung neben den von den Wiegeelementen ermittelten Daten weitere Daten enthalten, beispielsweise einen Zeitstempel oder eine Identifikationsnummer des Geflügeltieres, die beispielsweise über einen entsprechenden Identifikationsleser, wie beispielsweise einen RFID-Reader, erkannt werden kann. Auf diese Weise kann die Auswertung der Daten verbessert werden.

Die Datenübermittlung kann ferner vorzugsweise nach jedem Wiegevorgang erfolgen. Der Beginn eines Wiegevorgangs wird vorzugsweise dann detektiert, wenn das/die Wiegeelement/e ein Gewicht von Null oder ein Gewicht unterhalb eines vorgegebenen Schwellwerts ermitteln und das Gewicht dann ansteigt, vorzugsweise über einen vorbestimmten Schwellwert ansteigt, was ein Indikator dafür ist, dass ein Geflügeltier den Boden betreten hat. Vorzugsweise ist das Wiegemodul angeordnet und ausgebildet, einen Wiegevorgang automatisch zu starten und/oder eine Gewichtsermittlung automatisch durchzuführen, wenn ein Geflügeltier den Boden betritt und/oder wenn eine oder mehrere Wiegezellen eine Gewichtsveränderung ermitteln, die einen vorgegebenen Schwellwert überschreiten.

Ferner vorzugsweise können die Daten auch im Wiegemodul, beispielsweise in einem Speicherelement, gespeichert werden. Es ist darüber hinaus bevorzugt, dass die Daten von mehreren Wiegevorgängen gebündelt übermittelt werden, beispielsweise in bestimmten Zeitabständen, wie etwa täglich.

Es ist ferner bevorzugt, dass das Wiegemodul ausgebildet ist, einen Wert für eine Gewicht eines Geflügeltieres aus den von dem/den Wiegeelement(en) ermittelten Daten zu ermitteln und/oder einen Wert für ein Gewicht eines Geflügeltieres auf Basis einer Gesamtgewichtsdifferenz zu ermitteln. Insbesondere wenn zwei oder mehrere Wiegeelemente vorgesehen sind, ist es vorteilhaft, dass das Gewicht des Geflügeltieres aus den Daten sämtlicher Wiegeelemente des Wiegemoduls ermittelt wird.

Bei einem Wiegemodul eines Einzelnests ist das Wiegemodul vorzugsweise ausgebildet, den Wert eines Gewichts eines Geflügeltieres beispielsweise auf Basis der aus dem Betreten des Einzelnests durch ein Geflügeltier bzw. durch den Aufenthalt eines Geflügeltieres auf dem Boden des Wiegemoduls resultierenden Gewichtszunahme zu ermitteln.

Eine Wiegemodul eines Gruppennests das Wiegemodul vorzugsweise ausgebildet, den Wert eines Gesamtgewichts der auf dem Boden des Wiegemoduls befindlichen Geflügeltieren zu ermitteln. Das Wiegemodul eines Gruppennests ist Vorzug Wasser ausgebildet, den Wert eines Gewichts eines einzelnen Geflügeltieres beispielsweise auf Basis einer Veränderung des Gesamtgewichts der auf dem Boden des Wiegemoduls befindlichen Geflügeltieren zu ermitteln. Eine solche Veränderung des Gesamtgewichts ergibt sich insbesondere dann, wenn ein Geflügeltier das Wiegemodul oder das Nest betritt und/oder verlässt. Auf einer solchen Gesamtgewichtsdifferenz kann somit auf das Gewicht eines einzelnen Geflügeltieres geschlossen werden.

Vorzugsweise ist das Wiegemodul ausgebildet, bei der Ermittlung eines Werts eines Gewichts eines einzelnen Geflügeltieres einen Abgleich mit einem maximalen Wert und/oder einem minimalen Wert und/oder einen zulässigen Wertebereich für das Gewicht vorzunehmen. Auf diese Weise können Fehlmessungen, die beispielsweise durch ein gleichzeitiges Betreten und/oder Verlassen des Gruppennests durch zwei oder mehr Geflügeltiere erkennen und gesondert behandeln, beispielsweise durch Aussonderung und/oder Löschung und/oder Kenntlichmachung der Fehlmessungen. Ein solcher minimaler Wert und/oder ein maximaler Wert und/oder ein Wertebereich kann auch als prozentuale Abweichung, beispielsweise bis zu 20 %, von einem vorgegebenen Wert und/oder einem Durchschnittswert angegeben werden. Vorzugsweise sind der minimale Wert und/oder der maximale Wert und/oder der Wertebereich einstellbar und/oder veränderbar. Dies hat den Vorteil, dass dem sich über die Aufenthaltsdauer der Geflügeltieren in einem Geflügelstall verändernden (Durchschnitts-) Gewicht (in der Regel eine Gewichtszunahme) der Geflügeltieren Rechnung getragen werden kann.

In einer weiteren bevorzugten Ausführungsform ist vorgesehen, dass das Wiegemodul ausgebildet ist, eine Eiablage durch ein auf dem Wiegemodul befindliches Geflügeltier aus den von dem/den Wiegeelement(en) ermittelten Daten, auf Basis einer Gewichtsdifferenz zu ermitteln. Wenn sich ein Geflügeltier auf dem Wiegemodul befindet und ein Ei legt, verlässt dieses Ei vorzugsweise den Boden des Wiegemoduls, beispielsweise durch Abrollen, was insbesondere auch durch eine Neigung des Bodens das Wiegemoduls erleichtert werden kann. Auf diese Weise verringert sich das auf dem Boden des Wiegemoduls befindliche Gewicht um das Gewicht des gelegten Eies. Vorzugsweise ist für die Gewichtsdifferenz, auf deren Basis ein Wert für das Gewicht eines Eis ermittelt wird, ein Minimalwert und/oder ein Maximalwert und/oder ein Wertebereich vorgegeben und/oder vorgebbar. Da ein Ei in der Regel ein deutlich geringeres Gewicht aufweist als ein Geflügeltier, ist hierdurch eine Differenzierung zwischen dem Gewicht eines Geflügeltieres und dem Gewicht eines Eies leicht möglich. Die Ermittlung einer Eiablage ist vorzugsweise bei Wiegemodulen für Einzelnester und/oder bei Wiegemodulen für Gruppennester einsetzbar.

Ferner vorzugsweise ist vorgesehen, dass das Wiegemodul ausgebildet ist, eine Futteraufnahme durch ein auf dem Wiegemodul befindliches Geflügeltier aus den von dem/den Wiegeelement(en) ermittelten Daten, insbesondere auf Basis einer Gewichtsdifferenz, zu ermitteln.

In einer bevorzugten Ausführungsform ist vorgesehen, dass der Boden als Gitterstruktur, beispielsweise als Gitterrost, ausgebildet ist.

Eine weitere bevorzugte Weiterbildung ist gekennzeichnet durch eine Schutzstruktur, welche angeordnet und ausgebildet ist, das Wiegeelement vor Verschmutzung zu schützen. Es können auch mehrere Schutzstrukturen vorgesehen sein. Vorzugsweise ist eine Schutzstruktur pro Halteelement vorgesehen, um die an dem Halteelement angeordneten Wiegeelemente vor Verschmutzung zu schützen. Insbesondere ist eine Ausbildung der Schutzstruktur als geneigte Abdeckung oder Prallplatte bevorzugt, welche insbesondere einen Schutz vor herabfallendem Schmutz, wie beispielsweise Kot, bietet.

Gemäß einem weiteren Aspekt der Erfindung wird die eingangs genannte Aufgabe gelöst durch ein Nest für eine Geflügeltierhaltung, umfassend ein zuvor beschriebenes Wiegemodul. Das Nest kann ein Einzelnest oder ein Gruppennest sein.

Vorzugsweise weist das das Wiegemodul, und/oder das Nest einen Identifikationsleser auf, wie beispielsweise einen RFID-Reader. Auf diese Weise kann z.B. eine Identifikationsnummer des Geflügeltieres festgestellt werden.

Gemäß einem weiteren Aspekt der Erfindung wird die eingangs genannte Aufgabe gelöst durch eine Tieraufenthaltsvorrichtung, insbesondere eine Vorrichtung zur Einzelfütterung von Geflügeltieren, umfassend ein zuvor beschriebenes Wiegemodul.

Vorzugsweise weist die Tieraufenthaltsvorrichtung, insbesondere die Vorrichtung zur Einzelfütterung von Geflügeltieren, eine Futterbereitstellungsanordnung auf. Die Futterbereitstellungsanordnung umfasst vorzugsweise eine Futterschale und/oder eine Futterzuführung. Die Futterzuführung kann beispielsweise als Schnecke und/oder Spirale ausgebildet sein und/oder eine Rohrleitung umfassen. Die Futterbereitstellungsanordnung ist vorzugsweise ausgebildet, eine Menge an bereitgestelltem Futter zu ermitteln. Dies kann beispielsweise durch eine Dosiereinrichtung erfolgen, die beispielsweise als Volumendosierer ausgebildet sein kann, und/oder durch eine Futterwiegeeinrichtung. Die Menge an bereitgestellten Futter kann insbesondere als Kontrollgröße für eine durch Gewichtsermittlung ermittelte Futteraufnahme dienen. Vorzugsweise ist die Futterbereitstellungsanordnung, insbesondere die Futterschale, derart angeordnet und/oder ausgebildet, dass ein Entfernen von Futter aus der Futterbereitstellungsanordnung nur durch Futteraufnahme durch das Geflügeltier möglich ist. Vorzugsweise ist die Futterbereitstellungsanordnung, insbesondere die Futterschale, derart ausgebildet, dass ein Herausschieben und/oder Herausfallen von Futter aus der Futterbereitstellungsanordnung, insbesondere aus der Futterschale, beim Fressen verhindert oder reduziert wird. Insbesondere ist die Futterschale derart ausgebildet und/oder angeordnet, dass herausgeschobenes Futter nicht auf das Wiegemodul, insbesondere den über ein oder mehrere Wiegeelemente gelagerten Boden des Wiegemoduls, fallen kann.

Ferner vorzugsweise weist die Tieraufenthaltsvorrichtung einen Identifikationsleser auf, wie beispielsweise einen RFID-Reader. Auf diese Weise kann z.B. eine Identifikationsnummer des Geflügeltieres festgestellt werden.

Gemäß einem weiteren Aspekt der Erfindung wird die eingangs genannte Aufgabe gelöst durch ein Verfahren zur, insbesondere nestintegrierten, Wiegung von Geflügeltieren, umfassend Bereitstellen eines zuvor beschriebenen Wiegemoduls und/oder eines zur vorgeschriebenen Nests und/oder einer zuvor beschriebenen Tieraufenthaltsvorrichtung, Wiegen eines Geflügeltiers während seines Aufenthalts auf dem Wiegemodul und/oder im Nest mittels des Wiegemoduls und/oder in der Tieraufenthaltsvorrichtung mittels des Wiegemoduls.

Das Verfahren wird vorzugsweise fortgebildet durch Ermitteln eines Werts für ein Gewicht eines Geflügeltieres aus den von dem/den Wiegeelement(en) ermittelten Daten, und/oder Ermitteln eines Werts für ein Gewicht eines Geflügeltieres auf Basis einer Gesamtgewichtsdifferenz, und/oder Ermitteln einer Eiablage durch ein auf dem Wiegemodul befindliches Geflügeltier aus den von dem/den Wiegeelement(en) ermittelten Daten, insbesondere auf Basis einer Gewichtsdifferenz, und/oder Ermitteln einer Futteraufnahme durch ein auf dem Wiegemodul befindliches Geflügeltier aus den von dem/den Wiegeelement(en) ermittelten Daten, insbesondere auf Basis einer Gewichtsdifferenz.

Gemäß einem weiteren Aspekt der Erfindung wird die eingangs genannte Aufgabe gelöst durch ein Verfahren zur Ermittlung der Futteraufnahme von Geflügeltieren, umfassend Identifikation eines in eine Vorrichtung zur Einzelfütterung von Geflügeltieren eingetretenen Geflügeltieres, vorzugsweise anhand eines am/im Geflügeltier angebrachten/implantierten Transponders, Ermitteln eines Werts für ein Eintrittsgewicht des Geflügeltieres bei Eintritt in die Tieraufenthaltsvorrichtung mittels eines zuvor beschriebenen Wiegemoduls, Ermitteln einer Menge an bereitgestelltem Futter, insbesondere durch Gewichtsmessung von dosiertem Futter, Ermitteln eines Werts für ein Austrittsgewicht des Geflügeltieres bei Austritt aus der Tieraufenthaltsvorrichtung mittels eines zuvor beschriebenen Wiegemoduls,

Das Verfahren zur Ermittlung der Futteraufnahme von Geflügeltieren umfasst vorzugsweise Ermitteln einer Futteraufnahme des Geflügeltieres aus der Differenz zwischen Eintritts- und Austrittsgericht. Ferner vorzugsweise umfasst das Verfahren zur Ermittlung der Futteraufnahme von Geflügeltieren Vergleichen der ermittelten Futteraufnahme mit der ermittelten Menge an bereitgestelltem Futter, wobei vorzugsweise bei Abweichen der ermittelten Futteraufnahme von der ermittelten Menge an bereitgestellten Futter ein Warnsignal generiert wird.

Gemäß einem weiteren Aspekt der Erfindung wird die eingangs genannte Aufgabe gelöst durch die Verwendung eines zuvor beschriebenen Wiegemoduls und/oder eines zur vorgeschriebenen Nests, zur, insbesondere nestintegrierten, Wiegung von Geflügeltieren und/oder einer zuvor beschriebenen Tieraufenthaltsvorrichtung zur Wiegung von Geflügeltieren und/oder zur Ermittlung einer Futteraufnahme.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Merkmalen des Wiegemoduls verwiesen.

Eine bevorzugte Ausführungsform der Erfindung wird beispielhaft anhand der beiliegenden Figuren beschrieben. Es zeigen:
- Figur 1:: eine dreidimensionale Ansicht eines Geflügeltierstalls;
- Figur 2:: eine Seitenansicht des Geflügeltierstalls gemäß Figur 1;
- Figur 3:: einen Querschnitt des Geflügeltierstalls entlang der Schnittebene A-A gemäß Figur 2;
- Figur 4:: eine Vergrößerung des Ausschnitts B gemäß Figur 3;
- Figur 5:: eine dreidimensionale Ansicht einer beispielhaften Ausführungsform eines Wiegemoduls;
- Figur 6:: eine Draufsicht auf das Wiegemodul gemäß Figur 5;
- Figur 7:: eine Seitenansicht der Längsseite des Wiegemoduls gemäß Figur 5;
- Figur 8:: eine Seitenansicht der Querseite des Wiegemoduls gemäß Figur 5;
- Figur 9:: eine dreidimensionale Ansicht eines Geflügeltierstalls mit Tieraufenthaltsvorrichtung; und
- Figur 10:: einen vergrößerten, geschnittenen Ausschnitt aus Figur 9.

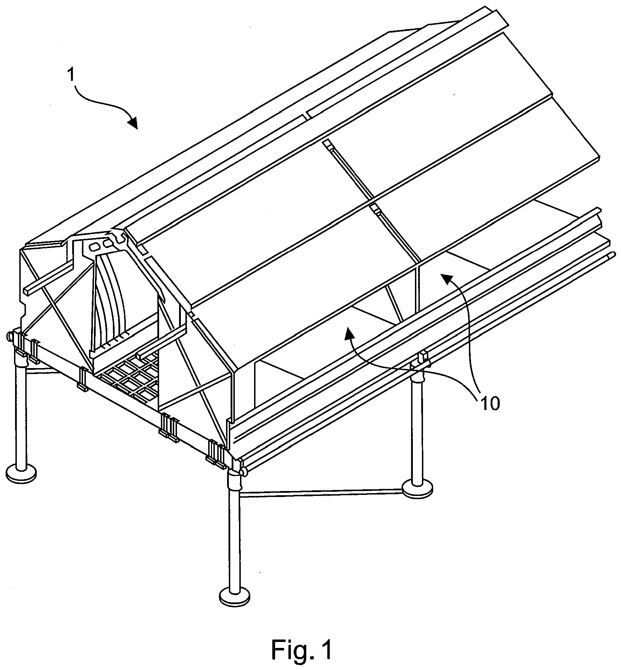

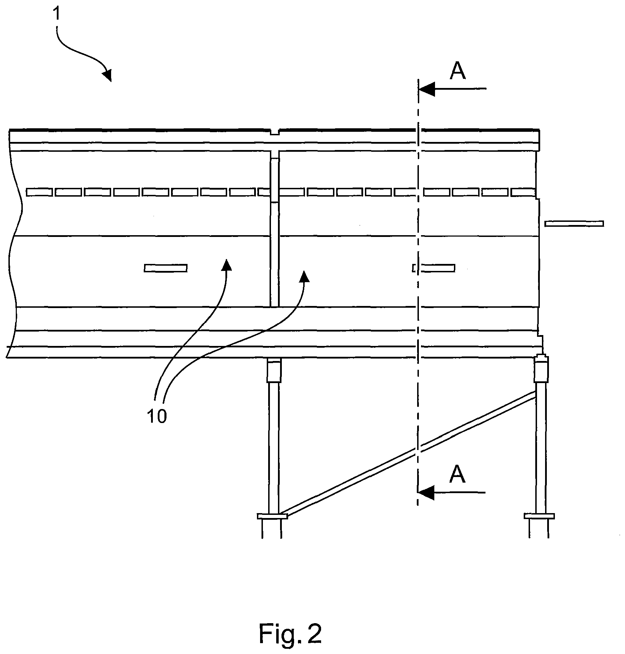

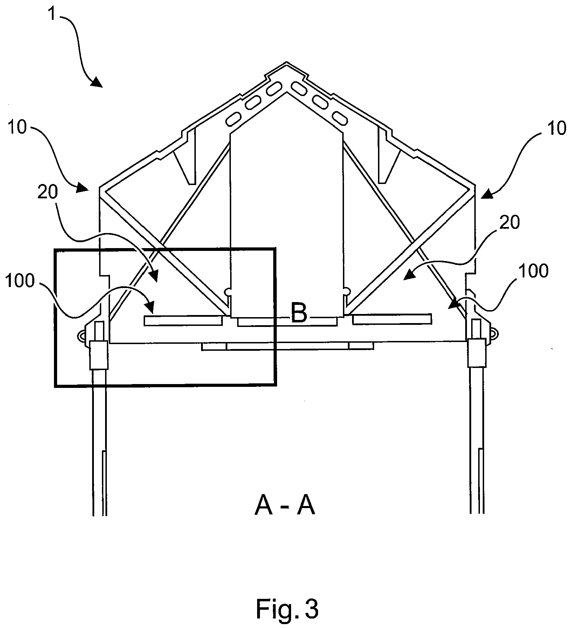

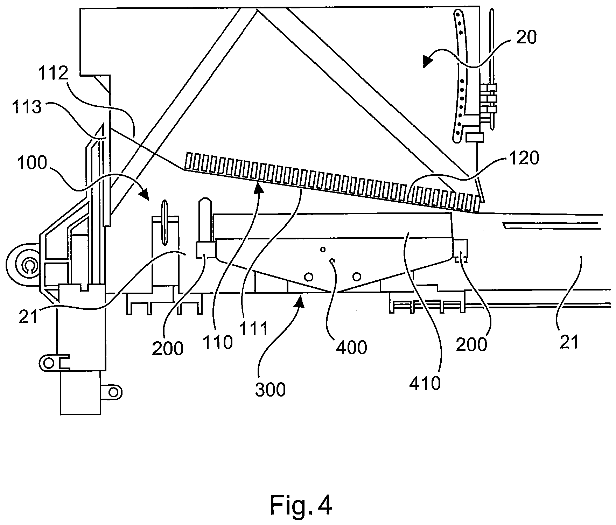

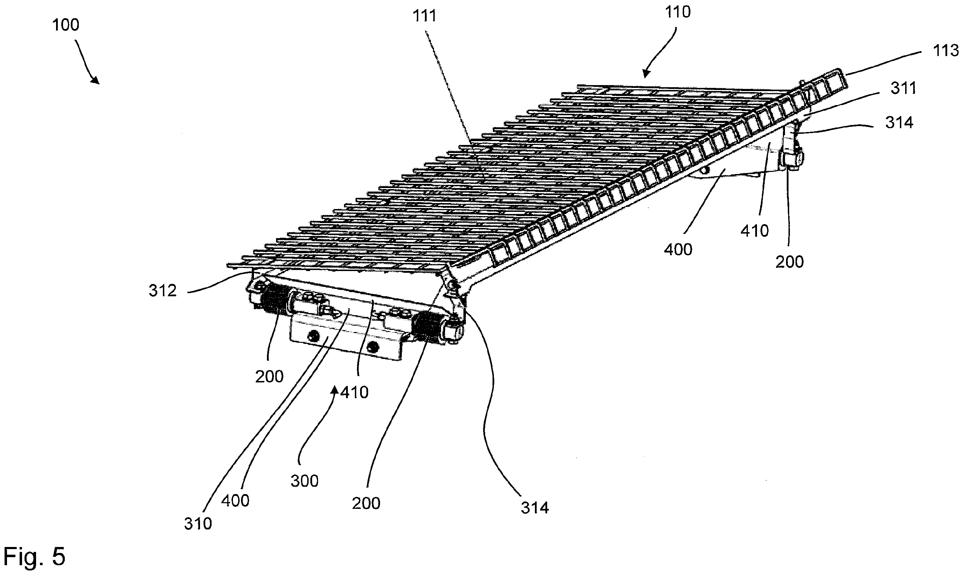

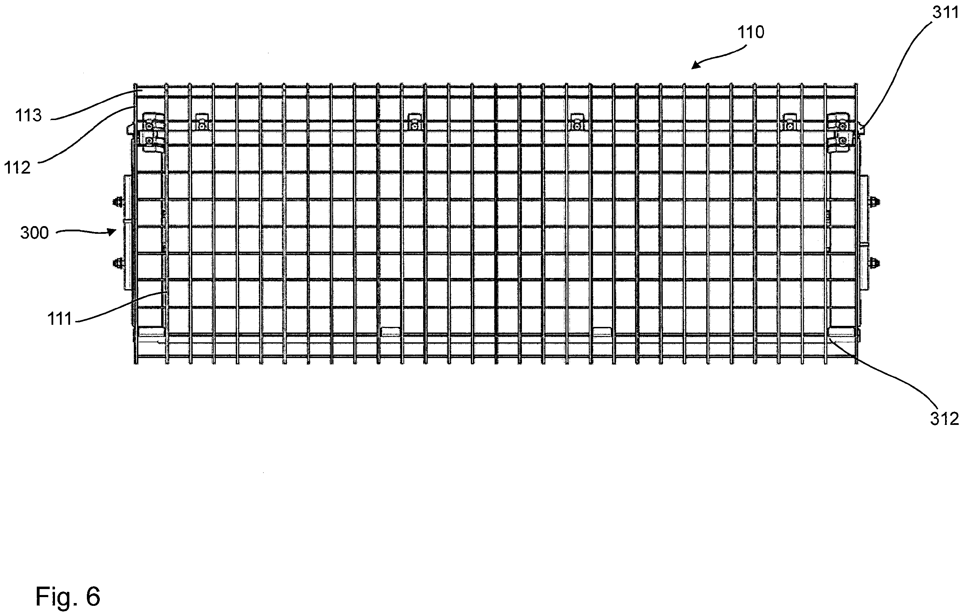

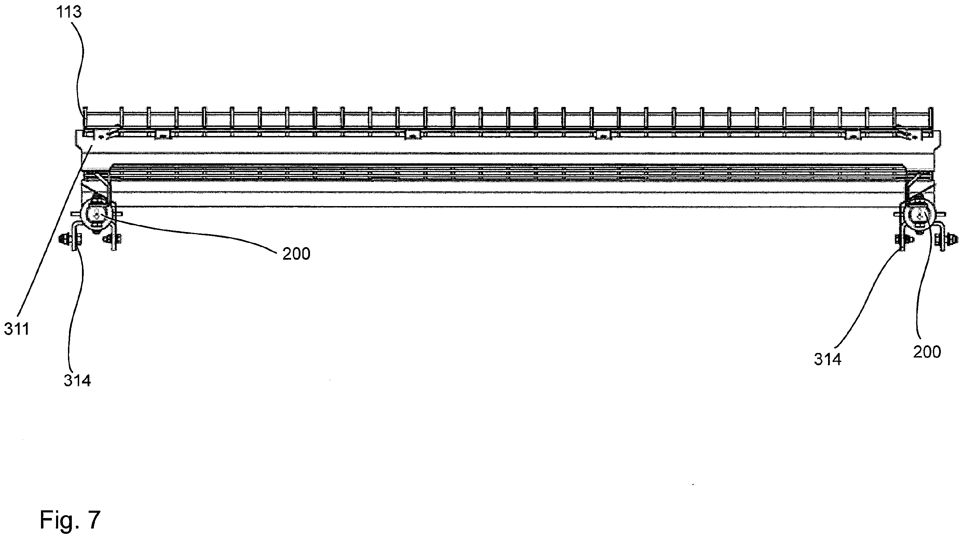

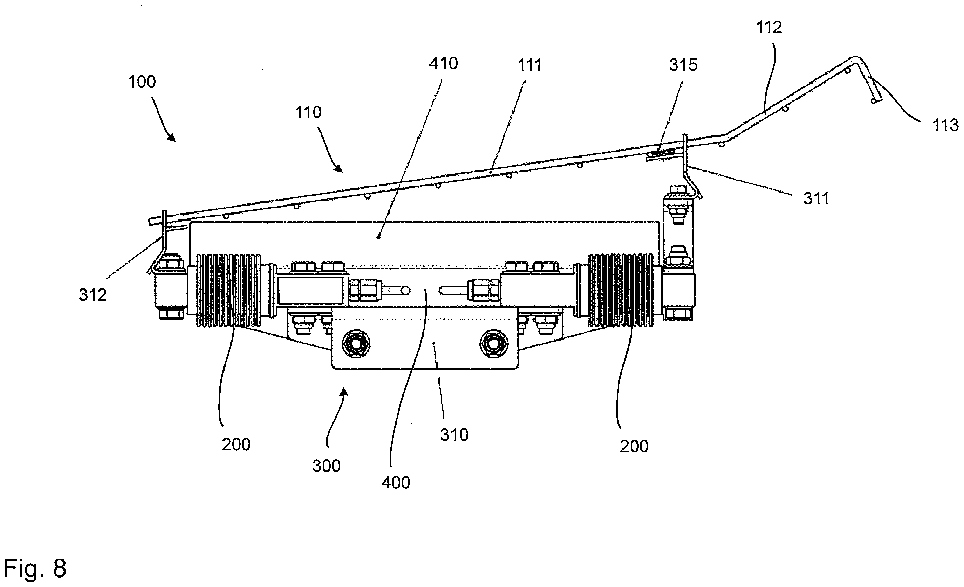

In den Figuren 1-4 ist ein Geflügeltierstall 1 mit Tieraufenthaltsbereichen 10 dargestellt. Wie insbesondere in den Figuren 3 und 4 zu erkennen ist, sind in Nestern 20 der Tieraufenthaltsbereiche 10 Wiegemodule 100 vorgesehen. In den Figuren 5-8 ist eine beispielhafte Ausführungsform eines solchen Wiegemoduls 100 näher dargestellt.

In einem Geflügeltierstall 1, beispielsweise für Mast-Elterntiere, sind in der Regel mehrere Tieraufenthaltsbereiche 10 vorgesehen. In den Tieraufenthaltsbereichen 10 sind Nester 20 vorgesehen mit einem Nestgehäuse 21.

An dem Nestgehäuse 21 ist über eine Haltevorrichtung 300 ein Wiegemodul 100 angeordnet, wie insbesondere in Figur 4 zu erkennen ist. In Figur 4 ist auf dem als Gitterelement ausgebildeten Boden 110 des Wiegemoduls 100 eine Einlegematte 120 angeordnet. In den Figuren 5-8 ist keine Einlegematte 120 gezeigt, kann aber auch dort vorgesehen werden.

Wie insbesondere in den Figuren 4-8 zu erkennen ist, ist das Wiegemodul 100 wie im Folgenden beschrieben aufgebaut. Das Wiegemodul 100 weist einen als Gitterelement oder Gitterrost ausgebildeten Boden 110 auf. Geflügeltiere können sich entweder direkt auf dem Boden 110 aufhalten oder auf einer auf dem Boden 110 angeordneten Einlegematte 120.

Das Wiegemodul 100 weist ferner eine Haltevorrichtung 300 mit zwei Halteelementen 310 auf. Die beiden Halteelemente 310 sind an gegenüberliegenden Seiten oder Kanten des Wiegemoduls 100 angeordnet, und zwar im hier gezeigten Beispiel auf den beiden gegenüberliegenden kurzen Seiten des im Wesentlichen rechteckförmigen Wiegemoduls 100.

An jeweils gegenüberliegenden Enden der Halteelemente 310 ist jeweils ein Wiegeelement 200 in Form einer Wiegezelle angeordnet. Insgesamt umfasst das Wiegemodul 100 vier Wiegeelemente 200, die sich im Bereich der Ecken des im Wesentlichen rechteckförmigen Bodens 110 des Wiegemoduls 100 befinden.

Der Boden 110 des Wiegemoduls 100 ist über die vier Wiegeelement 200 an der Haltevorrichtung 300 gelagert.

Wie insbesondere in den Figuren 4, 5 und 8 zu erkennen ist, ist der Boden 110 im Betriebszustand zur Horizontalen geneigt ausgerichtet. Der Boden 110 weist eine Aufenthaltsfläche 111 auf, welche zur Horizontalen geneigt ist. Ferner weist der Boden 110 einen Endbereich 112 auf, der sowohl zur Aufenthaltsfläche 111 als auch zur Horizontalen geneigt ist. Der Endbereich 112 ist zur Horizontalen stärker geneigt als die Aufenthaltsfläche 111. Am Ende des Endbereichs 112 befindet sich eine nach unten gerichtete Abkantung 113.

Die im Betriebszustand untere Kante des Bodens 110 ist an einer Schiene 312 befestigt, die wiederum mit den im Bereich der Ecken befindlichen Wiegeelemente 200 verbunden ist. Die im Betriebszustand obere Kante des Bodens 110, die der im Betriebszustand unteren Kante gegenüberliegt, ist über Klemmen 315, eine Schiene 311 und über Abstandselemente 314 in Form von U-Profilen mit den im Bereich der Ecken befindlichen Wiegeelementen 200 verbunden. Wie insbesondere in den Figuren 4, 5, 6 und 8 zu erkennen ist, wird hier als Seite oder Kante des Bodens 110 insbesondere auch ein vom jeweiligen Ende des Bodens 110 beabstandeter Bereich verstanden, in dem die Schienen 312, 311 angeordnet sein können. Insbesondere wird als obere Kante des Bodens 110 auch der Bereich zwischen der Aufenthaltsfläche 111 und dem Endbereich 112 verstanden.

Das Wiegemodul 100 weist ferner zwei Schutzstrukturen 400 auf, welche angeordnet und ausgebildet sind, die Wiegeelemente 200 vor Verschmutzung zu schützen. Es ist pro Halteelement 310 eine Schutzstruktur 400 vorgesehen, die an dem Halteelement 310 angeordnet ist und die an dem Halteelement 310 angeordneten Wiegeelemente 200 schützt. Hierzu weist die Schutzstruktur 400 eine geneigte Abdeckung 410 auf, welche insbesondere einen Schutz vor herabfallenden Schmutz, wie beispielsweise Kot, bietet.

Das Wiegemodul 100 ermöglicht eine nestintegrierte Wiegung von Geflügeltieren, die sich mittelbar oder unmittelbar auf dem Boden 110 des Wiegemoduls 100 aufhalten. Hierdurch ergibt sich eine besonders vorteilhafte, genaue und schonende Ermittlung des Gewichts der Geflügeltiere, da sich die Geflügeltiere in der Regel auf dem Boden 110 des Wiegemoduls 100 in einem Nest 20 vereinzelt aufhalten und sich in der Regel relativ ruhig und bewegungsarm verhalten.

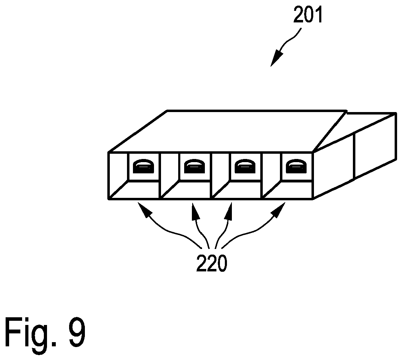

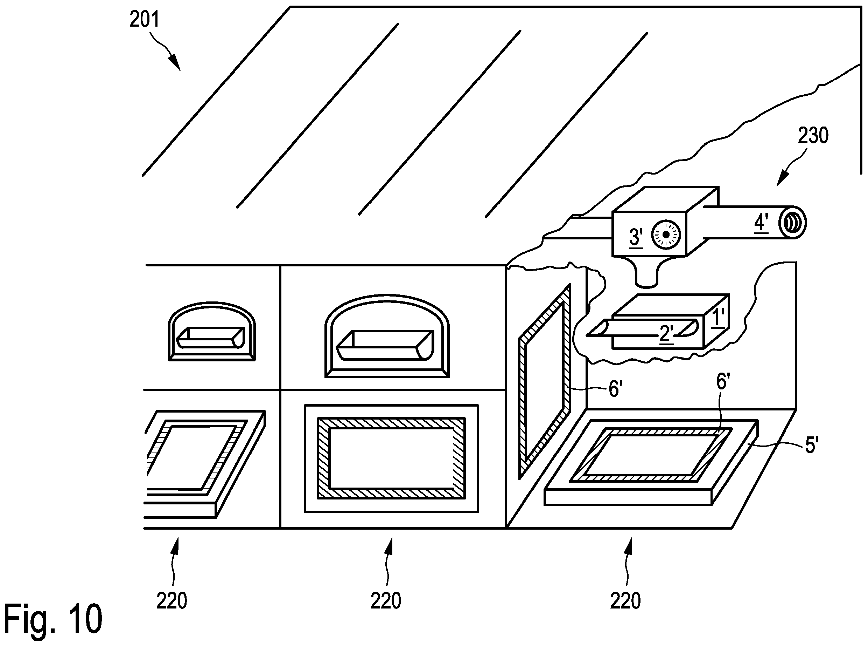

In den Figuren 9 und 10 ist ein Geflügeltierstall 201 mit mehreren Tieraufenthaltsvorrichtungen in Form von Vorrichtungen zur Einzelfütterung von Geflügeltieren 220 dargestellt. Wie insbesondere in Figur 10 zu erkennen ist, sind in den Vorrichtungen zur Einzelfütterung von Geflügeltieren 220 Wiegemodule 5' vorgesehen.

Als Wiegemodul 5' kann ein Wiegemodul 100 wie in den Figuren 5-8 dargestellt zum Einsatz kommen.

Die im teilgeschnittenen Bereich von Figur 10 dargestellte Vorrichtung zur Einzelfütterung von Geflügeltieren 220 weist eine Futterbereitstellungsanordnung 230 auf, welche eine Futterschale 1', 2' umfasst. Diese ist in dem in Figur 10 dargestellten Beispiel als Kippschale ausgebildet, wobei auch andere Ausgestaltungen möglich sind. Die Futterschale 1', 2' wird von einer Futterzuführung 4' gespeist, die ausgebildet ist, eine Menge an bereitgestelltem Futter zu ermitteln. Hierzu ist die Dosiereinrichtung in Form eines Volumendosierers 3' vorgesehen.

Die Vorrichtung zur Einzelfütterung von Geflügeltieren 220 weist ferner einen Identifikationsleser auf, wie beispielsweise einen RFID-Reader, auf, der beispielsweise an einer der in Figur 10 mit 6', 6" bezeichneten Positionen angebracht sein kann.

Die Vorrichtung zur Einzelfütterung von Geflügeltieren 220 ermöglicht einen Vergleich des Eintrittsgewichts mit dem Austrittsgewicht eines Geflügeltieres. Somit kann eine Gewichtsveränderung ermittelt werden, wodurch Rückschlüsse auf die Futteraufnahme gezogen werden können. Wenn parallel über die Dosiereinrichtung in Form eines Volumendosierers 3' die Menge an bereitgestellten Futter ermittelt wird, kann hierüber eine Kontrolle erfolgen. Der Identifikationsleser ermöglicht die Identifikation des Geflügeltieres, so dass die Futteraufnahme tierindividuell zugeordnet werden kann.

## Patentansprüche

1. Wiegemodul (100) für ein Nest (20) in einer Geflügeltierhaltung, umfassend einen Boden (110) zur Aufnahme von Geflügeltieren und/oder von einer Nestunterlage und eine Haltevorrichtung (300), mit der das Wiegemodul (100) an einer Tieraufenthaltsvorrichtung, nämlich an einer Nestvorrichtung befestigbar ist, wobei der Boden (110) über ein Wiegeelement gelagert ist, wobei das Wiegeelement zwischen der Haltevorrichtung (300) und dem Boden (110) angeordnet ist, **dadurch gekennzeichnet, dass** die Haltevorrichtung (300) zwei oder mehr Halteelemente (310) umfasst, wobei an zwei gegenüberliegenden Seiten des Bodens (110) jeweils ein Halteelement (310) angeordnet ist.

2. Wiegemodul (100) nach dem vorhergehenden Anspruch, **dadurch gekennzeichnet, dass** der Boden (110) über zwei, drei oder mehrere, insbesondere vier, Wiegeelemente (200) gelagert ist, und/oder **dadurch gekennzeichnet, dass** der auf zwei gegenüberliegenden Seiten über jeweils ein Wiegeelement, vorzugsweise jeweils zwei Wiegeelemente, gelagert ist, und/oder **dadurch gekennzeichnet, dass** der Boden (110) im Betriebszustand zur Horizontalen geneigt ausgerichtet ist.

3. Wiegemodul (100) nach mindestens einem der vorhergehenden Ansprüche, **dadurch gekennzeichnet, dass** zwei gegenüberliegende Kanten des Bodens (110) (110), insbesondere eine im Betriebszustand obere und eine im Betriebszustand untere Kante des Bodens (110), jeweils an einer Schiene befestigt sind, und/oder **dadurch gekennzeichnet, dass** eine im Betriebszustand obere Kante des Bodens (110) über ein Abstandselement gelagert ist, und/oder **gekennzeichnet durch** eine Sendeeinrichtung, die angeordnet und ausgebildet ist, vom Wiegeelement ermittelte Daten zu senden.

4. Wiegemodul (100) nach mindestens einem der vorhergehenden Ansprüche,
- **dadurch gekennzeichnet, dass** das Wiegemodul (100) ausgebildet ist, einen Wert für ein Gewicht eines Geflügeltieres aus den von dem/den Wiegeelement(en) (200) ermittelten Daten zu ermitteln, und/oder
- einen Wert für ein Gewicht eines Geflügeltieres auf Basis einer Gesamtgewichtsdifferenz zu ermitteln, und/oder
- **dadurch gekennzeichnet, dass** das Wiegemodul (100) ausgebildet ist, eine Eiablage durch ein auf dem Wiegemodul (100) befindliches Geflügeltier aus den von dem/den Wiegeelement(en) (200) ermittelten Daten, auf Basis einer Gewichtsdifferenz zu ermitteln, und/oder
- eine Futteraufnahme durch ein auf dem Wiegemodul befindliches Geflügeltier aus den von dem/den Wiegeelement(en) ermittelten Daten, insbesondere auf Basis einer Gewichtsdifferenz, zu ermitteln.

5. Wiegemodul (100) nach mindestens einem der vorhergehenden Ansprüche, **dadurch gekennzeichnet, dass** der Boden (110) als Gitterstruktur ausgebildet ist; und/oder
**gekennzeichnet durch** eine Schutzstruktur, welche angeordnet und ausgebildet ist, das Wiegeelement (200) vor Verschmutzung zu schützen, und/oder
**gekennzeichnet durch** einen Identifikationsleser, wie beispielsweise einen RFID-Reader, insbesondere zur Feststellung einer Identifikationsnummer des Geflügeltieres.

6. Nest (20) für eine Geflügeltierhaltung, umfassend ein Wiegemodul (100) nach mindestens einem der vorhergehenden Ansprüche.

7. Nest (20) nach dem vorhergehenden Anspruch,
umfassend einen Identifikationsleser, wie beispielsweise einen RFID-Reader, insbesondere zur Feststellung einer Identifikationsnummer des Geflügeltieres.

8. Tieraufenthaltsvorrichtung, insbesondere Vorrichtung zur Einzelfütterung von Geflügeltieren, umfassend ein Wiegemodul (100) nach mindestens einem der vorhergehenden Ansprüche.

9. Tieraufenthaltsvorrichtung nach dem vorhergehenden Anspruch,
- umfassend eine Futterbereitstellungsanordnung (230), die vorzugsweise eine Futterschale (1', 2') und/oder eine Futterzuführung (4') umfasst, wobei die Futterbereitstellungsanordnung vorzugsweise ausgebildet ist, eine Menge an bereitgestelltem Futter zu ermitteln, und/oder
- umfassend einen Identifikationsleser, wie beispielsweise einen RFID-Reader, insbesondere zur Feststellung einer Identifikationsnummer des Geflügeltieres.

10. Verfahren zur, insbesondere nestintegrierten, Wiegung von Geflügeltieren, umfassend
- Bereitstellen eines Wiegemoduls (100) nach mindestens einem der vorhergehenden Ansprüche 1-7 und/oder eines Nests (20) nach Anspruch 8 und/oder einer Tieraufenthaltsvorrichtung nach einen der beiden vorhergehenden Ansprüche,
- Wiegen eines Geflügeltiers während seines Aufenthalts auf dem Wiegemodul (100) und/oder im Nest (20) mittels des Wiegemoduls (100) und/oder in der Tieraufenthaltsvorrichtung mittels des Wiegemoduls (100).

11. Verfahren nach dem vorhergehenden Anspruch umfassend
- Ermitteln eines Werts für ein Gewicht eines Geflügeltieres aus den von dem/den Wiegeelement(en) (200) ermittelten Daten, und/oder
- Ermitteln eines Werts für ein Gewicht eines Geflügeltieres auf Basis einer Gesamtgewichtsdifferenz, und/oder
- Ermitteln einer Eiablage durch ein auf dem Wiegemodul (100) befindliches Geflügeltier aus den von dem/den Wiegeelement(en) ermittelten Daten, insbesondere auf Basis einer Gewichtsdifferenz, und/oder
- Ermitteln einer Futteraufnahme durch ein auf dem Wiegemodul (100) befindliches Geflügeltier aus den von dem/den Wiegeelement(en) ermittelten Daten, insbesondere auf Basis einer Gewichtsdifferenz.

12. Verfahren zur Ermittlung der Futteraufnahme von Geflügeltieren, umfassend
- Identifikation eines in eine Vorrichtung zur Einzelfütterung von Geflügeltieren eingetretenen Geflügeltieres, vorzugsweise anhand eines am/im Geflügeltier angebrachten/implantierten Transponders,
- Ermitteln eines Werts für ein Eintrittsgewicht des Geflügeltieres bei Eintritt in die Tieraufenthaltsvorrichtung mittels eines Wiegemoduls (100) nach mindestens einem der vorhergehenden Ansprüche 1-7,
- Ermitteln einer Menge an bereitgestelltem Futter, insbesondere durch Gewichtsmessung von dosiertem Futter,
- Ermitteln eines Werts für ein Austrittsgewicht des Geflügeltieres bei Austritt aus der Tieraufenthaltsvorrichtung mittels eines Wiegemoduls (100) nach mindestens einem der vorhergehenden Ansprüche 1-7,

13. Verfahren nach dem vorhergehenden Anspruch,
umfassend
- Ermitteln einer Futteraufnahme des Geflügeltieres aus der Differenz zwischen Eintritts- und Austrittsgericht,
- vorzugsweise Vergleichen der ermittelten Futteraufnahme mit der ermittelten Menge an bereitgestelltem Futter, wobei vorzugsweise bei Abweichen der ermittelten Futteraufnahme von der ermittelten Menge an bereitgestellten Futter ein Warnsignal generiert wird.

14. Verwendung eines Wiegemoduls (100) nach mindestens einem der vorhergehenden Ansprüche 1-7 und/oder eines Nests (20) nach dem vorgehenden Anspruch 8, zur, insbesondere nestintegrierten, Wiegung von Geflügeltieren und/oder einer Tieraufenthaltsvorrichtung nach einem der Ansprüche 9-10 zur Wiegung von Geflügeltieren und/oder zur Ermittlung einer Futteraufnahme.

## Claims

1. A weighing module (100) for a nest (20) in a poultry management system comprising a floor (110) for receiving poultry and/or a nesting pad and a mounting device (300) with which the weighing module (100) can be attached to an animal holding installation, namely to a nest installation, wherein the floor (110) is supported by a weighing element, wherein the weighing element is arranged between the mounting device (300) and the floor (110), **characterized in that** the mounting device (300) comprises two or more mounting elements (310), wherein one mounting element, respectively, is arranged on two opposite sides of the floor.

2. A weighing module (100) pursuant to the previous claim, **characterized in that** the floor (110) is supported by two, three or more, in particular four, weighing elements (200), and/or **characterized in that** the floor is supported on two opposite sides by one weighing element respectively, preferably by two weighing elements, respectively, and/or **characterized in that**, during operation, the floor (110) is slanted towards the horizontal.

3. A weighing module (100) pursuant to at least one of the previous claims, **characterized in that** two opposite edges of the floor (110), in particular a, during operation, upper edge of the floor and a, during operation, lower edge of the floor (110), are attached to a guide rail, respectively, and/or **characterized in that** a, during operation, upper edge of the floor (110) is supported by a spacer element, and/or **characterized in** a transmission device which is arranged and configured to transmit data determined by the weighing element.

4. A weighing module (100) pursuant to at least one of the previous claims,
- **characterized in that** the weighing module (100) is configured to determine a value for a weight of a poultry animal from the data determined by the weighing element(s) (200), and/or
- to determine a value for a weight of a poultry animal on the basis of a total weight difference, and/or
- **characterized in that** the weighing module (100) is configured to detect the laying of an egg by a poultry animal on the weighing module (100) from the data determined by the weighing element(s) (200) based on a weight difference, and/or
- to determine the ingestion of feed by a poultry animal on the weighing module from the data determined by the weighing element(s), in particular on the basis of a weight difference.

5. A weighing module (100) pursuant to at least one of the previous claims,
**characterized in that** the floor (110) is designed as a grating structure; and/or
**characterized by** a protective structure, which is arranged and designed to protect the weighing element (200) from dirt, and/or
**characterized by** an identification reader, for example an RFID reader, in particular for determining an identification number of the poultry animal.

6. A nest (20) for a poultry management system comprising a weighing module (100) pursuant to at least one of the previous claims.

7. A nest (20) pursuant to the previous claim,
comprising an identification reader, for example an RFID reader, in particular for determining an identification number of the poultry animal.

8. An animal holding installation, in particular an installation for the individual feeding of poultry animals, comprising a weighing module (100) pursuant to at least one of the previous claims.

9. An animal holding installation pursuant to the previous claim,
- comprising a feed provision arrangement (230), which preferably comprises a feed pan (1', 2') and/or a feed supply (4'), wherein the feed provision arrangement is preferably configured to determine an amount of provided feed, and/or
- comprising an identification reader, for example an RFID reader, in particular for determining an identification number of the poultry animal.

10. A method of weighing poultry animals, in particular in a nest-integrated manner,
comprising
- providing a weighing module (100) pursuant to at least one of the previous claims 1-7 and/or a nest (20) pursuant to claim 8 and/or an animal holding installation pursuant to one of the two previous claims,
- weighing of a poultry animal during its stay on the weighing module (100) and/or in the nest (20) by means of the weighing module (100) and/or in the animal holding installation by means of the weighing module (100).

11. A method pursuant to the previous claim comprising
- determining a value for the weight of a poultry animal from the data determined by the weighing element(s) (200), and/or
- determining a value for a weight of a poultry animal on the basis of a total weight difference, and/or
- detecting the laying of an egg by a poultry animal on the weighing module (100) from the data determined by the weighing element(s), in particular on the basis of a weight difference, and/or
- determining the ingestion of feed by a poultry animal on the weighing module (100) from the data determined by the weighing element(s), in particular on the basis of a weight difference.

12. A method of determining the feed ingestion of poultry animals,
comprising
- Identification of a poultry animal which has entered the installation for the individual feeding of poultry, preferably by means of a transponder attached to/implanted into the poultry animal,
- determining a value for an entry weight of the poultry animal when it enters the animal holding installation, in particular by means of a weighing module (100) pursuant to at least one of the previous claims 1-7,
- determining an amount of provided feed, in particular by measuring the weight of dosed feed,
- determining a value for an exit weight of the poultry animal when it leaves the animal holding installation, in particular by means of a weighing module (100) pursuant to at least one of the previous claims 1-7,

13. A method pursuant to the previous claim,
comprising
- determining a feed ingestion of the poultry animal from the difference between the entry and the exit weight,
- preferably comparing the determined feed ingestion with the determined amount of provided feed, wherein preferably a warning signal will be generated if the determined feed ingestion deviates from the determined amount of provided feed.

14. Use of a weighing module (100) pursuant to at least one of the previous claims 1-7 and/or a nest (20) pursuant to the previous claim 8 for weighing poultry, in particular in a nest-integrated manner, and/or of an animal holding installation pursuant to one of the claims 9-10 for the weighing of poultry and/or for determining a feed ingestion.

## Revendications

1. Module de pesage (100) pour un nid (20) dans un élevage de volailles, comprenant un fond (110) pour recevoir des volailles et/ou un support de nid et un dispositif de maintien (300), avec lequel le module de pesage (100) peut être fixé sur un dispositif de séjour d'animaux, à savoir sur un dispositif de nid, dans lequel le fond (110) est monté au-dessus d'un élément de pesage, dans lequel l'élément de pesage est disposé entre le dispositif de maintien (300) et le fond (110), **caractérisé en ce que** le dispositif de maintien (300) comprend deux éléments de maintien (310) ou plus, dans lequel respectivement un élément de maintien (310) est disposé sur deux côtés se faisant face du fond (110).

2. Module de pesage (100) selon la revendication précédente, **caractérisé en ce que** le fond (110) est monté au-dessus de deux, trois ou de plusieurs, en particulier quatre, éléments de pesage (200), et/ou **caractérisé en ce que** le est monté sur deux côtés se faisant face au-dessus de respectivement un élément de pesage, de préférence respectivement deux éléments de pesage, et/ou **caractérisé en ce que** le fond (110) est orienté de manière inclinée par rapport à l'horizontale dans l'état de fonctionnement.

3. Module de pesage (100) selon au moins l'une quelconque des revendications précédentes, **caractérisé en ce que** deux arêtes se faisant face du fond (110) (110) en particulier une arête supérieure dans l'état de fonctionnement et une arête inférieure dans l'état de fonctionnement du fond (110), sont fixées respectivement sur un rail, et/ou **caractérisé en ce qu'**une arête supérieure dans l'état de fonctionnement du fond (110) est montée au-dessus d'un élément d'espacement, et/ou **caractérisé par** un système d'envoi qui est disposé et est réalisé pour envoyer des données déterminées par l'élément de pesage.

4. Module de pesage (100) selon au moins l'une quelconque des revendications précédentes,
- **caractérisé en ce que** le module de pesage (100) est réalisé pour déterminer une valeur pour un poids d'une volaille à partir des données déterminées par le/les élément(s) de pesage (200), et/ou
- pour déterminer une valeur pour un poids d'une volaille sur la base d'une différence de poids totale, et/ou
- **caractérisé en ce que** le module de pesage (100) est réalisé pour déterminer sur la base d'une différence de poids, à partir des données déterminées par le/les élément(s) de pesage (200) une ponte par une volaille se trouvant sur le module de pesage (100), et/ou
- pour déterminer en particulier sur la base d'une différence de poids à partir des données déterminées par l'élément/les éléments de pesage une consommation d'aliments par une volaille se trouvant sur le module de pesage.

5. Module de pesage (100) selon au moins l'une quelconque des revendications précédentes, **caractérisé en ce que** le fond (110) est réalisé en tant qu'une structure grillagée ; et/ou
**caractérisé par** une structure de protection, laquelle est disposée et réalisée pour protéger l'élément de pesage (200) contre tout encrassement, et/ou
**caractérisé par** un lecteur d'identification, comme un lecteur de RFID, en particulier pour déterminer un numéro d'identification de la volaille.

6. Nid (20) pour un élevage de volailles, comprenant un module de pesage (100) selon au moins l'une quelconque des revendications précédentes.

7. Nid (20) selon la revendication précédente, comprenant un lecteur d'identification, comme un lecteur RFID, en particulier pour déterminer un numéro d'identification de la volaille.

8. Dispositif de séjour de volailles, en particulier dispositif pour nourrir individuellement des volailles, comprenant un module de pesage (100) selon au moins l'une quelconque des revendications précédentes.

9. Dispositif de séjour de volailles selon la revendication précédente,
- comprenant un ensemble de fourniture d'aliments (230), qui comprend de préférence une auge pour aliments (1', 2') et/ou une arrivée d'aliments (4'), dans lequel l'ensemble de fourniture d'aliments est réalisé de préférence pour déterminer une quantité d'aliments fournis, et/ou
- comprenant un lecteur d'identification, comme un lecteur RFID, en particulier pour déterminer un numéro d'identification de la volaille.

10. Procédé de pesage, en particulier intégré au nid, de volailles, comprenant
- la fourniture d'un module de pesage (100) selon au moins l'une quelconque des revendications 1 - 7 et/ou d'un nid (20) selon la revendication 8 et/ou d'un dispositif de séjour d'animaux selon l'une quelconque des deux revendications précédentes,
- le pesage d'une volaille au cours de son séjour sur le module de pesage (100) et/ou dans le nid (20) au moyen du module de pesage (100) et/ou dans le dispositif de séjour d'animaux au moyen du module de pesage (100).

11. Procédé selon la revendication précédente, comprenant
- la détermination d'une valeur pour un poids d'une volaille à partir des données déterminées par le/les élément(s) de pesage (200) et/ou
- la détermination d'une valeur pour un poids d'une volaille sur la base d'une différence de poids totale, et/ou
- la détermination d'une ponte par une volaille se trouvant sur le module de pesage (100) à partir des données déterminées par le/les élément(s) de pesage, en particulier sur la base d'une différence de poids, et/ou
- la détermination d'une consommation d'aliments par une volaille se trouvant sur le module de pesage (100) à partir des données déterminées par le/les éléments de pesage, en particulier sur la base d'une différence de poids.

12. Procédé de détermination de la consommation d'aliments par des volailles, comprenant
- l'identification d'une volaille entrée dans un dispositif pour nourrir individuellement des volailles, de préférence à l'aide d'un transpondeur installé/implanté sur/dans la volaille,
- la détermination d'une valeur d'un poids d'entrée de la volaille lors de l'entrée dans le dispositif de séjour d'animaux au moyen d'un module de pesage (100) selon au moins l'une quelconque des revendications précédentes 1 - 7,
- la détermination d'une quantité d'aliments fournis, en particulier par la mesure de poids d'aliments dosés,
- la détermination d'une valeur d'un poids de sortie de la volaille lors de la sortie hors du dispositif de séjour d'animaux au moyen d'un module de pesage (100) selon au moins l'une quelconque des revendications précédentes 1 - 7.

13. Procédé selon la revendication précédente, comprenant
- la détermination d'une consommation d'aliments de la volaille à partir de la différence entre le poids d'entrée et le poids de sortie,
- de préférence la comparaison de la consommation d'aliments déterminée à la quantité déterminée d'aliments fournis, dans lequel de préférence en cas d'écart de la consommation d'aliments déterminée par rapport à la quantité déterminée d'aliments fournis, un signal d'alerte est généré.

14. Utilisation d'un module de pesage (100) selon au moins l'une quelconque des revendications précédentes 1 - 7 et/ou d'un nid (20) selon la revendication précédente 8, pour le pesage, en particulier intégré au nid, de volailles et/ou d'un dispositif de séjour d'animaux selon l'une quelconque des revendications 9 -10 pour peser des volailles et/ou pour déterminer une consommation d'aliments.
